(19) Europäisches Patentamt
European Patent Office
Office européen des brevets

(11) **EP 4 254 559 A1**

(12) **EUROPEAN PATENT APPLICATION**

(43) Date of publication:
**04.10.2023 Bulletin 2023/40**

(21) Application number: **23162973.4**

(22) Date of filing: **20.03.2023**

(51) International Patent Classification (IPC):
*H01M 4/525* (2010.01)    *H01M 4/1391* (2010.01)
*H01M 4/131* (2010.01)    *H01M 4/04* (2006.01)
*H01M 4/36* (2006.01)    *H01M 4/02* (2006.01)
*H01M 4/505* (2010.01)    *H01M 10/052* (2010.01)

(52) Cooperative Patent Classification (CPC):
**H01M 4/131; H01M 4/0471; H01M 4/1391;
H01M 4/362; H01M 4/525;** H01M 4/02;
H01M 4/505; H01M 10/052; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 KR 20220040222**

(71) Applicant: **SK On Co., Ltd.
Seoul 03161 (KR)**

(72) Inventors:
• **LEE, Yoon Ji
34124 Daejeon (KR)**
• **LEE, Sang Wook
34124 Daejeon (KR)**
• **CHO, Yong Hyun
34124 Daejeon (KR)**

(74) Representative: **Stolmár & Partner
Patentanwälte PartG mbB
Blumenstraße 17
80331 München (DE)**

(54) **CATHODE ACTIVE MATERIAL FOR LITHIUM SECONDARY BATTERY AND LITHIUM SECONDARY BATTERY INCLUDING THE SAME**

(57) A cathode active material for a lithium secondary battery according to an embodiment of the present invention includes active material particles containing a lithium-nickel metal oxide, and a tungsten-containing coating formed on at least portion of the active material particles. A content of tungsten measured by an ICP (inductively coupled plasma) is in a range from 100 ppm to 5,000 ppm, and a content of carbon measured by a CS (Carbon-Sulfur) analyzer is 500 ppm or less.

EP 4 254 559 A1

**Description**

BACKGROUND

1. Field of the Invention

The present invention relates to a cathode active material for a lithium secondary battery and a lithium secondary battery including the same. More particularly, the present invention relates to a lithium metal oxide-based cathode active material, and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of the secondary battery includes, e.g., a lithium secondary battery, a nickel-cadmium battery, a nickel-hydrogen battery, etc. The lithium secondary battery exhibits desirable properties such as high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium metal oxide may be used as a cathode active material of a lithium secondary battery. Examples of the lithium metal oxide include a nickel-based lithium metal oxide.

As an application range of lithium secondary batteries is being expanded, extended life-span, higher capacity and operational stability are required. Accordingly, a cathode active material capable of providing higher capacity is being developed. However, when the cathode active material capable of providing high capacity is used, chemical stability and mechanical stability may be relatively deteriorated, and life-span properties of the secondary battery may be deteriorated.

For example, impurities and unreacted residues may be present on a surface of a cathode active material particle. In this case, defects such as gas generation and explosion may be caused due to a side reaction with the electrolyte.

SUMMARY

According to an aspect of the present invention, there is provided a cathode active material for a lithium secondary battery having improved capacity and life-span stability.

According to an aspect of the present invention, there is provided a lithium secondary battery including a cathode active material with improved capacity and life-span stability.

A cathode active material for a lithium secondary battery includes a plurality of active material particles containing a lithium-nickel metal oxide, and a tungsten-containing coating on at least a portion of the active material particles. A content of tungsten measured by an ICP (inductively coupled plasma) in active material particles is in a range from 100 ppm to 5,000 ppm, and a content of carbon measured by a CS (Carbon-Sulfur) analyzer in active material particles is 500 ppm or less.

In some embodiments, the content of tungsten measured by the ICP in active material particles may be in a range from 200 ppm to 5,000 ppm.

In some embodiments, the content of carbon measured by the CS analyzer in active material particles is in a range from 10 ppm to 300 ppm.

In some embodiments, a ratio of the content of tungsten measured by the ICP relative to the content of carbon measured by the CS analyzer is in a range from 3 to 90.

In some embodiments, a ratio of the content of tungsten measured by the ICP relative to the content of carbon measured by the CS analyzer may be in a range from 4 to 65.

In some embodiments, the tungsten-containing coating may include a lithium tungsten oxide or tungsten oxide.

In some embodiments, the active material particles may have a form of a secondary particle in which a plurality of primary particles are aggregated, and the tungsten-containing coating may be formed on an outer surface of the secondary particle.

In some embodiments, a molar ratio of nickel among elements other than lithium and oxygen in the lithium-nickel metal oxide may be 0.8 or more.

In some embodiments, the lithium-nickel metal oxide may further contain at least one of cobalt (Co) and manganese (Mn).

In some embodiments, the active material particles may further contain at least one doping element or coating element selected from the group consisting of Na, Mg, Ca, Y, Ti, Hf, V, Nb, Ta, Cr, Mo, W, Fe, Cu, Ag, Zn, B, Al, Ga, C, Si, Sn and Zr.

In some embodiments, the lithium-nickel metal oxide may include a structure represented by Chemical Formula 1 below.

[Chemical Formula 1] $\quad$ $Li_xNi_{1-y}M_yO_{2+z}$

In Chemical Formula 1, $0.9 \leq x \leq 1.2$, $0.01 \leq y \leq 0.4$, $-0.5 \leq z \leq 0.1$, and M may include at least one selected from Na, Mg, Ca, Y, Ti, Hf, V, Nb, Ta, Cr, Mo, W, Mn, Co, Fe, Cu, Ag, Zn, B, Al, Ga, C, Si, Sn and Zr.

A lithium secondary battery includes a cathode comprising the cathode active material for a lithium secondary battery according to the above-described embodiments, and an anode facing the cathode.

In a method of preparing a cathode active material, an active material precursor containing nickel is provided. The active material precursor is reacted with a lithium source at a first temperature to form active material particles comprising a lithium-nickel metal oxide. The active material particles is dry-mixed with a tungsten source to form a tungsten-containing coating. A content of tungsten measured by an ICP (inductively coupled plasma) in the active material particles is in a range from 100 ppm to 5,000 ppm, and a content of carbon measured by a CS (Carbon-Sulfur) analyzer in the active material particles is 500 ppm or less.

In some embodiments, the tungsten source may include tungsten oxide.

In some embodiments, the first temperature may be in a range from 600 °C to 850 °C.

In some embodiments, the dry-mixing the active material particles and the tungsten source may include performing a heat treatment at a second temperature less than the first temperature.

In some embodiments, the second temperature may be in a range from 300 °C to 500 °C.

In some embodiments, the heat treatment may be performed for 10 hours to 16 hours.

According to embodiments of the present invention, a tungsten-containing coating is formed on a surface of a cathode active material particle, so that gas generation due to residues of a lithium source may be suppressed. For example, a carbon content present on the surface of the cathode active material particle may be controlled through the tungsten-containing coating. Accordingly, generation of carbon dioxide by a carbon component included in the residues may be reduced to improve high-temperature stability of a lithium secondary battery.

In some embodiments, a tungsten content relative to a carbon content may be adjusted within a predetermined range so that resistance properties, capacity stability, and chemical stability of the lithium secondary battery may be improved.

In some embodiments, the cathode active material may have a high-Ni composition of 80 mol% or more. From the combination of the high-nickel composition and the tungsten-containing coating, a high-power and high-stability lithium secondary battery may be effectively implemented.

BRIEF DESCRIPTION OF THE DRAWINGS

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

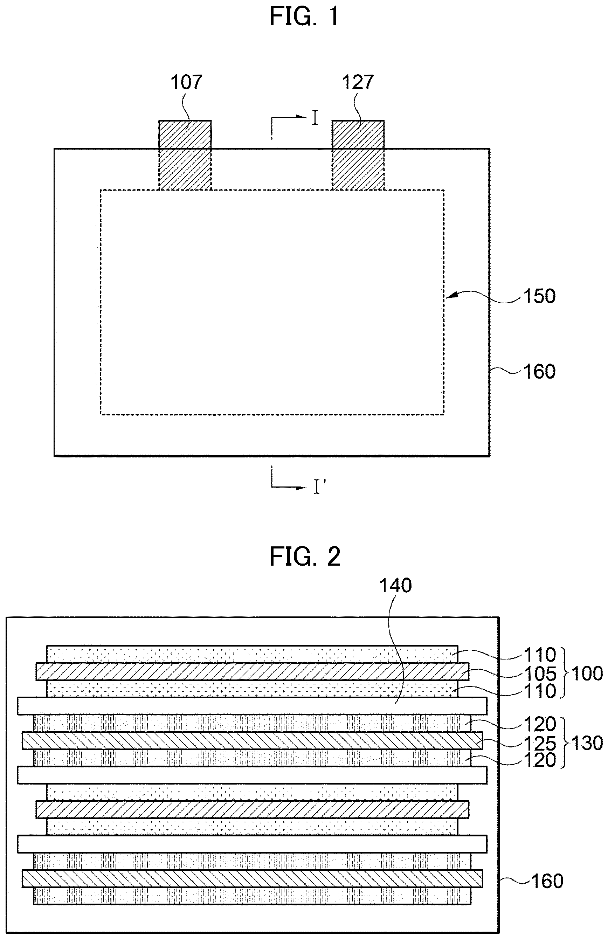

FIGS. 1 and 2 are a schematic plan view and a schematic cross-sectional view, respectively, illustrating a lithium secondary battery in accordance with exemplary embodiments.

DETAILED DESCRIPTION OF THE EMBODIMENTS

The terminology used herein is for the purpose of describing particular example embodiments only and is not intended to be limiting of the present inventive concept. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

A cathode active material for a lithium secondary battery according to embodiments (hereinafter, that may be abbreviated as a cathode active material) of the present invention includes a plurality of active material particles including a lithium-nickel metal oxide.

For example, the lithium-nickel metal oxide may further include at least one of cobalt (Co) and manganese (Mn). Preferably, the first cathode active material may include Ni-Co-Mn (NCM)-based lithium oxide.

For example, Ni may be provided as a metal related to a capacity of the lithium secondary battery. Therefore, a high-Ni composition may be adopted to the cathode active material, so that the cathode and the lithium secondary battery providing high power and capacity may be implemented.

However, as a content of Ni increases, long-term storage stability and life-span stability of the cathode or secondary battery may be relatively deteriorated. However, according to exemplary embodiments, life-span stability and capacity retention may be improved by using Mn. Additionally, in some embodiments, stable power may be achieved by including Co to maintain an electrical conductivity.

In some embodiments, the cathode active material or the lithium nickel metal oxide may further include a coating element or a doping element. For example, the coating element or doping element may include Na, Mg, Ca, Y, Ti, Hf, V, Nb, Ta, Cr, Mo, W, Fe, Cu, Ag, Zn, B, Al, Ga, C , Si, Sn, Zr, etc. These may be used alone or in combination thereof.

The coating element or the doping element may be present as an alloy of at least two or more of the elements or an oxide of the element. The cathode active material particles may be passivated by the coating or doping element, so that stability and life-span against penetration of an external object may be further improved.

In some embodiments, the lithium-nickel metal oxide may include a layered structure or a chemical structure represented by Chemical Formula 1 below.

[Chemical Formula 1]    $Li_xNi_{1-y}M_yO_{2+z}$

In Chemical Formula 1, $0.9 \leq x \leq 1.2$, $0.01 \leq y \leq 0.4$, and $-0.5 \leq z \leq 0.1$. M may include at least one of Na, Mg, Ca, Y, Ti, Hf, V, Nb, Ta, Cr, Mo, W, Mn, Co, Fe, Cu, Ag, Zn, B, Al, Ga, C, Si, Sn and Zr.

In some embodiments, the content or molar ratio $(1-y)$ of nickel in Chemical Formula 1 may be 0.7 or more, preferably 0.80 or more. For example, the molar ratio of nickel may be 0.85 or more, 0.88 or more, or 0.90 or more.

As described above, as the high-nickel composition is employed, the capacity cathode active material or the lithium secondary battery having high capacity may be implemented.

The cathode active material includes a tungsten-containing coating formed on at least a portion of a surface of the active material particle.

As used herein "coating" is used to refer to any of a partial, substantially complete, or complete coating. The tungsten-containing coating may cover at least a portion of an outer surface of the active material particle. In an embodiment, the tungsten-containing coating may partially cover the surface of the active material particle, and may be distributed to be spaced apart from each other in the form of a plurality of islands. In an embodiment, the tungsten-containing coating may have a continuous single-layered shape and may substantially entirely cover the active material particle.

In some embodiments, the tungsten-containing coating may include a lithium tungsten oxide (LWO). For example, the tungsten-containing coating may include a compound represented by Chemical Formula 2 below.

[Chemical Formula 2]    $Li_aW_bO_c$

In Chemical Formula 2, $1 \leq a \leq 5$, $0 < b \leq 3$, and $1 \leq c \leq 7$. For example, in Chemical Formula 2, $1 \leq a \leq 5$, $1 \leq b \leq 3$, and $2 \leq c \leq 7$.

In an embodiment, the lithium tungsten oxide included in the tungsten-containing coating may include one or more of $Li_2WO_3$, $Li_2WO_4$ and $Li_5W_2O_7$.

In some embodiments, the tungsten-containing coating may include a tungsten oxide (WO) phase. For example, the tungsten-containing coating may include $WO_2$, $W_2O_5$, and/or $WO_3$, preferably $WO_3$.

In some embodiments, the tungsten-containing coating may include both the lithium tungsten oxide (such as one or more of $Li_2WO_3$, $Li_2WO_4$, and $Li_5W_2O_7$) and the tungsten oxide (such as $WO_3$).

For example, the tungsten-containing coating may act as a barrier against side reactions of the cathode active material or the active material particles with an electrolyte. As described above, an unreacted lithium source may be eluted or transferred to the surface of the active material particle including the lithium-nickel metal oxide to exist as an impurity. For example, the impurity may include $Li_2CO_3$ and/or $LiOH$.

For example, $Li_2CO_3$ may be decomposed to generate $CO_2$ according to Equation 1 below, or $CO_2$ may be generated by reacting with HF derived from the electrolyte according to Equation 2 below.

$$[\text{Equation 1}] \quad Li_2CO_3 \rightarrow 2Li^+ + 2e^- + 0.5O_2 + CO_2(\uparrow)$$

$$[\text{Equation 2}] \quad Li_2CO_3 + 2HF \rightarrow 2LiF + H_2O + CO_2(\uparrow)$$

In exemplary embodiments, the tungsten-containing coating may be formed by reacting a tungsten component with a residual lithium to generate the above-described lithium tungsten oxide. Accordingly, the generation of $Li_2CO_3$ on the surface of the active material particle may be blocked or reduced. Thus, the carbon (C) content included in the cathode active material may be controlled by the tungsten-containing coating.

The tungsten-containing coating may include a tungsten oxide. The tungsten oxide may prevent LiOH from reacting with carbon dioxide in an air to be converted into $Li_2CO_3$.

For example, as described above, the generation and content of $Li_2CO_3$ may be controlled by the tungsten-containing coating, and a self-decomposition of $Li_2CO_3$ at high temperature or generation of gas due to the side reaction with the electrolyte may be controlled. Thus, high-temperature stability and high-temperature capacity retention properties of the cathode active material or the lithium secondary battery may be improved, and ignition and explosion of the battery may be prevented.

As described above, chemical instability of the cathode active material due to the adoption of the high-Ni composition may be alleviated or suppressed by the tungsten-containing coating.

A content of tungsten (W) in the cathode active material (e.g., the active material particles) measured by a high-frequency inductively coupled plasma (ICP) is in a range from about 100 ppm to about 5,000 ppm. In a preferable embodiment, the content of tungsten measured by the ICP may be in a range from about 200 ppm to about 5,000 ppm, more preferably from about 300 ppm to about 5,000 ppm, from about 500 ppm to about 5,000 ppm, or from about 1,000 ppm to about 5,000 ppm.

Within the above range, sufficient high-temperature stability may be improved from the tungsten-containing coating, and capacity degradation of the cathode active material due to an excessive coating formation may be prevented.

A carbon content of the cathode active material (e.g., the active material particles) measured through a carbon-sulfur analyzer (CS analyzer) is about 500 ppm or less. In a preferable embodiment, the carbon content by the CS analysis may be in a range from about 10 ppm to about 300 ppm, more preferably from about 10 ppm to about 200 ppm, from about 10 ppm to about 150 ppm, from about 10 ppm to about 100 ppm, or from about 60 ppm to about 100 ppm.

Within the above range, generation of gas due to the side reaction on the surface of the active material particle may be suppressed, and damages to the surface of the active material particle may be avoided.

In some embodiments, a ratio of the tungsten content through the ICP analysis relative to the carbon content through the CS analysis in the cathode active material may be in a range from about 3 to about 90, preferably from about 4 to about 65, more preferably from about 10 to about 65, or from about 20 to about 65.

The tungsten content relative to the carbon content may be adjusted within the above range, so that a balance between improvement of high-temperature stability/suppressing gas generation through the tungsten-containing coating and implementation of high capacity through the introduction of the high-nickel composition of the cathode active material may be maintained.

In exemplary embodiments, the active material particle may have a secondary particle structure in which a plurality of primary particles are substantially aggregated to form one particle. The tungsten-containing coating may be formed on an outer surface of the secondary particle.

In some embodiments, the tungsten-containing coating may also partially exist between the primary particles in an inner region of the secondary particle. An amount of the tungsten-containing coating (tungsten or a tungsten-containing compound) present on the outer surface may be greater than the amount between the primary particles.

Hereinafter, a method for manufacturing the cathode active material will be described.

In exemplary embodiments, active material metal sources may be prepared. The active material metal sources may include a nickel source, may preferably include a nickel source, a manganese source and a cobalt source. In this case, M in Chemical Formula 1 may include Mn and Co.

Examples of the nickel source include nickel sulfate ($NiSO_4$), nickel hydroxide ($Ni(OH)_2$), nickel nitrate ($Ni(NO_3)_2$), nickel acetate ($Ni(CH_3CO_2)_2$, a hydrate thereof, etc. Examples of the manganese source include manganese sulfate ($MnSO_4$), manganese hydroxide ($Mn(OH)_2$), manganese nitrate ($Mn(NO_3)_2$), manganese acetate ($Mn(CH_3CO)_2$), a hydrate thereof, etc. Examples of the cobalt source include cobalt sulfate ($CoSO_4$), cobalt hydroxide ($Co(OH)_2$), cobalt nitrate ($Co(NO_3)_2$), cobalt carbonate ($CoCO_3$), a hydrate thereof, etc.

In a preferable embodiment, nickel sulfate, manganese sulfate and cobalt sulfate may be used as the nickel source, manganese source and cobalt source, respectively.

In some embodiments, a compound (e.g., a hydroxide or an oxide) containing the above-described coating element or doping element may also be used.

In exemplary embodiments, an active material precursor may be obtained by mixing and reacting the above-described active material metal sources by, e.g., a co-precipitation method. For example, the active material precursor may be prepared in the form of a nickel-manganese-cobalt hydroxide.

A precipitating agent and/or a chelating agent may be used to promote the coprecipitation reaction. The precipitating agent may include an alkaline compound such as sodium hydroxide (NaOH) or sodium carbonate ($Na_2CO_3$). The chelating agent may include, e.g., an aqueous ammonia (e.g., $NH_3H_2O$), ammonium carbonate (e.g., $NH_3HCO_3$), etc.

The active material precursor may be mixed with a lithium source, and reacted by a heat-treatment to obtain lithium-nickel metal oxide particles. For example, a temperature (a first temperature) of the heat-treatment may be in a range from about 600°C to about 850°C.

The lithium source may include, e.g., lithium carbonate ($Li_2CO_3$), lithium nitrate ($LiNO_3$), lithium acetate ($CH_3COOLi$), lithium oxide ($Li_2O$), lithium hydroxide (LiOH), etc. These may be used alone or in combination thereof. Preferably, lithium hydroxide may be used as the lithium source.

In some embodiments, impurities such as LiOH and $Li_2CO_3$ may remain on the surface of the lithium-nickel metal oxide particle. The impurities may be removed by washing with an aqueous or organic solvent.

In some embodiments, the tungsten-containing coating may be formed on the surface of the lithium-nickel metal oxide particle through a heat-treatment after dry-mixing the lithium-nickel metal oxide particles and a tungsten source.

The tungsten source may include, e.g., a tungsten oxide (e.g., $WO_3$). The heat-treatment after the dry-mixing of the tungsten source may be performed at a temperature (a second temperature) ranging from 300 °C to 500 °C, preferably from 300 °C to 400°C. In an embodiment, the heat-treatment may be performed for 10 hours to 16 hours, or 10 hours to 15 hours.

An input amount of the tungsten source and the heat-treatment temperature may be adjusted to satisfy the above-described tungsten content, the carbon content and the content ratio of tungsten to carbon.

FIGS. 1 and 2 are a schematic plan view and a cross-sectional view, respectively, illustrating a lithium secondary battery in accordance with exemplary embodiments. FIG. 2 is a cross-sectional view taken along a line I-I' of FIG. 1 in a thickness.

Referring to FIGS. 1 and 2, the lithium secondary battery may include an electrode assembly including a cathode 100 and an anode 130. In some embodiments, the electrode assembly may further include a separation layer interposed between the cathode and the anode. The electrode assembly may be accommodated in a case 160 together with an electrolyte to be impregnated therein.

The cathode 100 may include a cathode active material layer 110 formed by coating the above-described cathode active material on a cathode current collector 105.

The cathode active material may include the above-described active material particles including the tungsten-containing coating. For example, an amount of the active material particles may be 50 wt% or more based on a total weight of the cathode active material. Preferably, the amount of the active material particles may be 60 wt% or more, 70 wt% or more, 80 wt% or more, or 90 wt% or more.

In an embodiment, the cathode active material may substantially consist of the active material particles.

For example, a slurry may be prepared by mixing and stirring the above-described cathode active material with a binder, a conductive material and/or a dispersive agent in a solvent. The slurry may be coated on the cathode current collector 105, and then dried and pressed to form the cathode 100.

The cathode current collector 105 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

The anode 130 may include an anode current collector 125 and an anode active material layer 120 formed by coating an anode active material on a surface of the anode current collector 125.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, a silicon-based compound, tin, etc., may be used.

The amorphous carbon may include a hard carbon, coke, a mesocarbon microbead (MCMB), a mesophase pitch-based carbon fiber (MPCF), etc.

The crystalline carbon may include a graphite-based material such as natural graphite, graphitized coke, graphitized MCMB, graphitized MPCF, etc.

The lithium alloy may further include aluminum, zinc, bismuth, cadmium, antimony, silicon, lead, tin, gallium, indium, etc.

The silicon-based compound may include, e.g., a silicon oxide ($SiO_x$; $0<x<2$), a silicate-based compound (e.g., lithium silicate), or a silicon-carbon composite compound such as silicon carbide (SiC).

In some embodiments, a slurry may be prepared by mixing and stirring the anode active material with a binder, a conductive material and/or a dispersive agent in a solvent. The slurry may be coated on the anode current collector, and then dried and pressed to form the anode 130.

The anode current collector 125 may include, e.g., gold, stainless steel, nickel, aluminum, titanium, copper, or an alloy thereof, and preferably may include copper or a copper alloy.

The binder and the conductive material substantially the same as or similar to those used for the cathode active material layer 110 may be used in the anode 130. In some embodiments, the binder for forming the anode 130 may include an aqueous binder such as styrene-butadiene rubber (SBR), and carboxymethyl cellulose (CMC) may also be used as a thickener.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation.

In exemplary embodiments, an electrode cell may be defined by the cathode 100, the anode 130 and the separation layer 140, and a plurality of the electrode cells may be stacked to form the electrode assembly 150 that may have e.g., a jelly roll shape. For example, the electrode assembly 150 may be formed by winding, laminating or folding of the separation layer 140.

The electrode assembly 150 may be accommodated together with the electrolyte in the case 160 to define the lithium secondary battery. In exemplary embodiments, a non-aqueous electrolyte may be used as the electrolyte.

The non-aqueous electrolyte may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Examples

Cathode active material particles having a composition of $Li[Ni_{0.8}Co_{0.1}Mn_{0.1}]O_2$ (hereinafter referred to as active material particles) were prepared. The active material particles and a tungsten source ($WO_3$) were mixed, and a heat-treatment was performed at a temperature in a range from 300 °C to 500 °C for 10 to 16 hours to prepare a cathode active material having a tungsten-containing coating. A ratio between a tungsten content and a carbon content in the active material was controlled by controlling an amount of $WO_3$ and temperature/time of the heat-treatment.

A cathode mixture was prepared by mixing the cathode active material, Denka Black® (acetylene black) as a conductive material, and PVDF as a binder in a mass ratio of 94:3:3, respectively. The mixture was coated on an aluminum current collector, and then dried and pressed to prepare a cathode. After the pressing, the electrode density of the cathode was adjusted to 3.5 g/cc or more.

93 wt% of natural graphite as an anode active material, 5 wt% of KS6 (synthetic graphite) as a flake type conductive material, 1 wt% of styrene-butadiene rubber (SBR) as a binder, and 1 wt% of carboxymethyl cellulose (CMC) as a thickener were mixed to form an anode slurry. The anode slurry was coated on a copper substrate, dried and pressed to prepare an anode.

The cathode and the anode prepared as described above were each notched by a predetermined size, and stacked with a separator (polyethylene, thickness: $25\mu m$) interposed therebetween to form an electrode cell. Each tab portion of the cathode and the anode was welded. The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by forming 1M $LiPF_6$ solution in a mixed solvent of ethylene carbonate (EC)/ethyl methyl carbonate (EMC)/diethylene carbonate (DEC) (25/45/30; volume ratio), and then adding 1 wt% of FEC (fluoroethylene carbonate), 0.5 wt% of PS (1,3-propane sultone) and 0.3 wt% of PRS (prop-1-ene-1,3-sultone).

Comparative Example

A cathode active material and a secondary battery were prepared by the same method as that in Examples, except that the formation of the tungsten-containing coating through the introduction of the tungsten source was omitted.

Experimental Example

(1) Tungsten and Carbon content

A content of tungsten (W) included in each cathode active materials of Examples and Comparative Example was measured using an ICP analyzer (Inductively Coupled Plasma-Optical Emission Spectroscopy, Agilent 5800). A carbon (C) content contained in each cathode active materials of Examples and Comparative Example was measured using a CS analyzer (Carbon & Sulfur Analyzer, CS844, manufactured by LECO).

The measurement results are shown in Table 1 below.

[Table 1]

|  | ICP analysis W(ppm) | CS analysis Carbon(C) (ppm) | W/C |
|---|---|---|---|
| Example 1 | 442 | 103 | 4.29 |
| Example 2 | 2046 | 95 | 21.54 |
| Example 3 | 4566 | 71 | 64.31 |
| Example 4 | 290 | 110 | 2.64 |
| Example 5 | 5002 | 55 | 90.94 |
| Comparative Example | 13 | 146 | 0.09 |

(2) DCIR Analysis

Charge/discharge (SOC 100%) was performed twice at conditions of 25°C, 0.5C and CC-CV, and then charging under a 0.5C CC-CV condition and 0.5C discharging were further performed to a state of SOC 50%. Thereafter, a voltage (a first voltage) was measured after being left for 30 minutes. Subsequently, after being i) discharged at 1C for 10 seconds and left for 40 seconds, ii) charged at 0.75 C for 10 seconds and left for 40 seconds, a voltage (a second voltage) was measured. DCIR was measured using a difference between the first voltage and the second voltage.

(3) HPPC Power Analysis

A HPPC discharge power of each secondary battery of Examples and Comparative Example was measured using internationally standardized HPPC (Hybrid Pulse Power Characterization) measurement method (Reference: FreedomCar battery test manual for power-assist hybrid electric vehicles, DOE/ID-11069, 2003).

(4) Capacity Retention (after storage at high temperature (60°C))

The lithium secondary batteries of Examples and Comparative Example were charged to SoC (State of Charge) 100% (CC-CV 0.5C 4.20V 0.1C cut-off). After being left for 16 weeks in a 60°C chamber, a discharge capacity was measured in a 25°C chamber. A capacity retention was evaluated by calculating a ratio of the measured discharge capacity to an initial discharge capacity as a percentage.

(5) Gas generation after high temperature storage

The lithium secondary batteries of Examples and Comparative Example were charged to SoC (State of Charge) 100% (CC-CV 1.0C 4.20V 0.1C Cut-off) and stored in a chamber at 60°C. After storage for 16 weeks, the lithium secondary batteries were taken out of the chamber and an amount of gas generated was measured using a gas chromatography. Specifically, to measure a total amount of gas generation, a hole was formed in a vacuum chamber of a predetermined volume (V), and a gas generation volume was calculated by measuring a pressure change.

The measurement results are shown in Table 2 below.

[Table 2]

| | DCIR (mΩ) | HPPC power (W/kg) | cCapacity Retention after high temperature storage | Gas Generation (mL) |
|---|---|---|---|---|
| Example 1 | 4.22 | 2819 | 86.4% | 36.1 |
| Example 2 | 3.87 | 2855 | 90.1% | 26.7 |
| Example 3 | 3.77 | 2893 | 91.6% | 21.8 |
| Example 4 | 3.91 | 2846 | 86.1% | 37.1 |
| Example 5 | 4.45 | 2805 | 91.7% | 20.1 |
| Comparative Example | 4.55 | 2811 | 85.9% | 38.2 |

Referring to Table 2, in Examples where the tungsten-containing coating was formed, improved high-temperature stability and high power properties were obtained compared to those from Comparative Example. Referring to Examples 1 to 3, as a ratio of the tungsten content (W) relative to the carbon content (C) was adjusted within a predetermined range, the power properties and high-temperature stability were balanced.

**Claims**

1. A cathode active material for a lithium secondary battery, comprising:

   a plurality of active material particles comprising a lithium-nickel metal oxide; and
   a tungsten-containing coating on at least a portion of the active material particles;
   wherein a content of tungsten measured by an ICP (inductively coupled plasma) is in a range from 100 ppm to 5,000 ppm, and a content of carbon measured by a CS (Carbon-Sulfur) analyzer is 500 ppm or less.

2. The cathode active material for a lithium secondary battery according to claim 1, the content of tungsten measured by the ICP is in a range from 200 ppm to 5,000 ppm.

3. The cathode active material for a lithium secondary battery according to any one of claims 1 and 2, wherein the content of carbon measured by the CS analyzer is in a range from 10 ppm to 300 ppm.

4. The cathode active material for a lithium secondary battery according to any one of claims 1 to 3, wherein a ratio of the content of tungsten measured by the ICP relative to the content of carbon measured by the CS analyzer is in a range from 3 to 90.

5. The cathode active material for a lithium secondary battery according to any one of claims 1 to 3, wherein a ratio of the content of tungsten measured by the ICP relative to the content of carbon measured by the CS analyzer is in a range from 4 to 65.

6. The cathode active material for a lithium secondary battery according to any one of claims 1 to 5, wherein the tungsten-containing coating comprises a lithium tungsten oxide or tungsten oxide.

7. The cathode active material for a lithium secondary battery according to any one of claims 1 to 6, wherein the active material particles have a form of a secondary particle in which a plurality of primary particles are aggregated, and the tungsten-containing coating is formed on an outer surface of the secondary particle.

8. The cathode active material for a lithium secondary battery according to any one of claims 1 to 7, wherein a molar ratio of nickel among elements other than lithium and oxygen in the lithium-nickel metal oxide is 0.8 or more.

9. The cathode active material for a lithium secondary battery according to claim 8, wherein the lithium-nickel metal oxide further contains at least one of cobalt (Co) and manganese (Mn).

10. The cathode active material for a lithium secondary battery according to any one of claims 1 to 9, wherein the active material particles further contain at least one doping element or coating element selected from the group consisting of Na, Mg, Ca, Y, Ti, Hf, V, Nb, Ta, Cr, Mo, W, Fe, Cu, Ag, Zn, B, Al, Ga, C, Si, Sn and Zr.

11. The cathode active material for a lithium secondary battery according to any one of claims 1 to 7, wherein the lithium-nickel metal oxide includes a structure represented by Chemical Formula 1 below:

[Chemical Formula 1] $\quad\quad Li_xNi_{1-y}M_yO_{2+z}$

wherein, in Chemical Formula 1, $0.9 \leq x \leq 1.2$, $0.01 \leq y \leq 0.4$, $-0.5 \leq z \leq 0.1$, M includes at least one selected from Na, Mg, Ca, Y, Ti, Hf, V, Nb, Ta, Cr, Mo, W, Mn, Co, Fe, Cu, Ag, Zn, B, Al, Ga, C, Si, Sn and Zr.

12. A lithium secondary battery, comprising:

a cathode comprising the cathode active material for a lithium secondary battery according to any one of claims 1 to 11; and
an anode facing the cathode.

# FIG. 1

# FIG. 2

Europäisches
Patentamt

European
Patent Office

Office européen
des brevets

# EUROPEAN SEARCH REPORT

Application Number

EP 23 16 2973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 818225 B2 (SUMITOMO METAL MINING CO) 20 January 2021 (2021-01-20) * claim 2 * * paragraph [0090] – paragraph [0091] * * paragraph [0093] * * paragraph [0096] * * paragraph [0099] * ----- | 1-12 | INV. H01M4/525 H01M4/1391 H01M4/131 H01M4/04 H01M4/36 |
| X | US 2014/127582 A1 (NAGAI HIROKI [JP]) 8 May 2014 (2014-05-08) * claims 1,3,4 * * paragraph [0085] * * paragraph [0131] * ----- | 1,2,7, 9-12 | ADD. H01M4/02 H01M4/505 H01M10/052 |
| X | KR 101 777 444 B1 (LG CHEMICAL LTD [KR]) 11 September 2017 (2017-09-11) * claims 9-10 * * paragraph [0133] * * paragraph [0086] * * paragraph [0120] * ----- | 1,2,9-12 | |
| X | WO 2018/160023 A1 (LG CHEMICAL LTD [KR]) 7 September 2018 (2018-09-07) * claims 1,2,3,5,8,20 * ----- | 1,2,6,7, 9-12 | TECHNICAL FIELDS SEARCHED (IPC) H01M |

The present search report has been drawn up for all claims

| Place of search | Date of completion of the search | Examiner |
|---|---|---|
| Munich | 21 July 2023 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 16 2973

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2023

| Patent document cited in search report | | Publication date | Patent family member(s) | | Publication date |
|---|---|---|---|---|---|
| JP 6818225 | B2 | 20-01-2021 | JP 6818225 | B2 | 20-01-2021 |
| | | | JP 2017134996 | A | 03-08-2017 |
| US 2014127582 | A1 | 08-05-2014 | CN 103563139 | A | 05-02-2014 |
| | | | JP 5692617 | B2 | 01-04-2015 |
| | | | JP WO2012164693 | A1 | 31-07-2014 |
| | | | KR 20140008464 | A | 21-01-2014 |
| | | | US 2014127582 | A1 | 08-05-2014 |
| | | | WO 2012164693 | A1 | 06-12-2012 |
| KR 101777444 | B1 | 11-09-2017 | NONE | | |
| WO 2018160023 | A1 | 07-09-2018 | NONE | | |

EPO FORM P0459

For more details about this annex : see Official Journal of the European Patent Office, No. 12/82